# EUROPÄISCHE PATENTSCHRIFT

(11) **EP 3 353 021 B1**
(45) Veröffentlichungstag und Bekanntmachung des Hinweises auf die Patenterteilung: **24.07.2019**
(21) Anmeldenummer: 16797864.2
(22) Anmeldetag: 16.11.2016
(51) Int. Cl.: B60T 7/12, B60T 13/68, B60T 15/18

(54) **BREMSANORDNUNG EINES FAHRZEUGS**
BRAKING ARRANGEMENT FOR A VEHICLE
DISPOSITIF DE FREINS POUR UN VÉHICULE

(30) Priorität: 20.11.2015 DE 102015222923
(43) Veröffentlichungstag der Anmeldung: 01.08.2018
(73) Patentinhaber: Siemens Mobility GmbH, 81739 München (DE)
(72) Erfinder: LICHTERFELD, Jens Peter, 91058 Erlangen (DE); WIESAND, Manfred, 90559 Burgthann (DE)
(86) Internationale Anmeldenummer: PCT/EP2016/077811
(87) Internationale Veröffentlichungsnummer: WO 2017/085096

(56) Entgegenhaltungen:
- WO-A1-03/033321
- WO-A1-2013/124213
- DE-C1- 10 042 215

## Beschreibung

Es ist aus der internationalen Anmeldung WO 2013/124213 A1 eine Bremsanordnung eines Fahrzeugs bekannt, die in einem Bremssteuerpfad eine elektropneumatische Wegeventileinrichtung aufweist. Die Wegeventileinrichtung weist zwei elektrisch betätigte Wegeventile auf und enthält ein Belüftungsventil und ein Halteventil. Beide Wegeventile sind mit elektrischen Steuersignalen einer elektronischen Bremssteuerung beaufschlagt. An einen Ausgang der Wegeventileinrichtung ist ein Eingang eines Wechselventils angeschlossen, das einen zweiten Eingang zur Verbindung mit einer Notlöseeinrichtung und einen Ausgang zur Verbindung zu Druckkammern von mehreren Bremszylindern aufweist. Die mehreren Bremszylinder können auf diese Weise jeweils mit einem gleichen Druck beaufschlagt werden, sofern kein Leck in den Bremsleitungen auftritt.

Die vorliegende Erfindung setzt hier an und stellt sich die Aufgabe, eine Bremsanordnung mit hoher Funktionssicherheit zu schaffen.

Zur Lösung dieser Aufgabe ist erfindungsgemäß eine Bremsanordnung eines Fahrzeugs mit mindestens zwei elektropneumatischen Wegeventileinrichtungen in jeweils einem ersten und einen zweiten Bremssteuerpfad und einem ersten und einem zweiten Ausgang der Wegeventileinrichtungen geeignet, die an jeweils einen ersten Steuereingang von zwei Relaisventilen angeschlossen sind; es ist eine erste Druckluftleitung vorgesehen, mit der ein zweiter Steuereingang des ersten Relaisventils über eine Magnetventileinrichtung mit dem ersten Steuereingang des zweiten Relaisventils verbindbar ist, und eine zweite Druckluftleitung, mit der ein zweiter Steuereingang des zweiten Relaisventils über die Magnetventileinrichtung mit dem ersten Steuereingang des ersten Relaisventils verbindbar ist.

Dabei ist unter einem Relaisventil ein Mengenverstärker gemeint, der in der Fachsprache auch als Druckumsetzer oder Druckübersetzer bezeichnet wird. Ein bekanntes Relaisventils solcher Art ist in der deutschen Offenlegungsschrift DE 198 35 635 A1 beschrieben und dort als ein Kolbensystem ausgeführt. Das bekannte Relaisventil weist mehrere Druckräume auf, von denen einer zu einem Bremszylinder führt.

Es ist aber auch möglich, ein Relaisventil als ein Membransystem auszubilden.

Ein wesentlicher Vorteil der erfindungsgemäßen Bremsanordnung besteht darin, dass die Bremsen eines Wagens mit beispielsweise zwei Drehgestellen pneumatisch redundant angesteuert werden können, so dass ein Leck in einer Bremsleitung nicht zum Ausfall der jeweiligen Bremse führen kann. Dabei ist dies in vorteilhaft einfacher Weise dadurch erreicht, dass bei den erfindungsgemäßen Relaisventilen in Abweichung von dem oben erwähnten bekanten Relaisventil jeweils zwei Steuereingänge eingebracht sind und die beiden Druckleitungen über die Magnetventileinrichtung mit den beiden Steuereingängen der Relaisventile über Kreuz verbunden sind. Es werden hier also mittels der Druckleitungen über Kreuz der zweite Steuereingang des ersten Relaisventils mit dem ersten Steuereingang des zweiten Relaisventils und ein zweiter Steuereingang des zweiten Relais mit dem ersten Steuereingang des ersten Relaisventils verbunden, wenn die Magnetventileinrichtung bestromt bzw. geschlossen ist, wobei der Steuerdruck der beiden Bremssteuerpfade auf beide Relaisventile überlagert wirkt und die Bremsen im gesamten Wagen funktionsfähig hält.

Bei der erfindungsgemäßen Bremsanordnung können die Bremsen in unterschiedlicher Weise ausgebildet sein. Ein bevorzugter Anwendungsfall für die Bremsanordnung ist die Betriebsbremse, auch Service-Bremse genannt.

Ferner erscheint es vorteilhaft, wenn die Relaisventile mit jeweils einem dritten Eingang einen Notbremspfad bilden.

Eine weitere vorteilhafte Ausgestaltung der Bremsanordnung sind Relaisventile, die mit jeweils einem vierten Eingang einen Lastkorrekturpfad bilden.

Bei der erfindungsgemäßen Bremsanordnung kann die Magnetventileinrichtung in verschiedener Weise ausgebildet sein. Als besonders vorteilhaft wird es angesehen, wenn die Magnetventileinrichtung eine Magnetventileinheit mit zwei gemeinsam zu- und abschaltbaren Durchgängen für die Druckluftleitungen zu den Relaisventilen ist. Eine solche Ausgestaltung hat den Vorteil, dass bei einem Wagen mit zwei Drehgestellen jedem Drehgestell ein Relaisventil zugeordnet werden kann und dass durch ein Auftrennen der Verbindung der Druckleitungen in der Magnetventileinrichtung - sie ist dann bestromt - bei einem Ausfall eines Bremssteuerpfades die Bremse im ganzen Wagen funktionsfähig bleibt.

Anderseits ist es auch möglich, die Magnetventileinrichtung aus zwei Magnetventilen aufzubauen, die jeweils getrennt zu- und abschaltbare Durchgänge für die Druckluftleitungen zu den Relaisventilen aufweisen, um jeden Bremssteuerpfad separat zuschalten zu können.

Bei der erfindungsgemäßen Bremsanordnung kann die Magnetventileinrichtung unterschiedlich ausgebildet sein. So kann es vorteilhaft sein, wenn die Magnetventileinrichtung im elektrisch nicht bestromten Zustand pneumatisch geschlossen ist.

Es kann aber auch mit Vorteilen verbunden sein, die Magnetventileinrichtung im elektrisch nicht bestromten Zustand pneumatisch durchgängig auszubilden.

Bei einer vorteilhaften Ausführungsform der erfindungsgemäßen Bremsanordnung ist das erste Relaisventil einem Drehgestell und das zweite Relaisventil einem weiteren Drehgestell desselben Wagens zugeordnet.

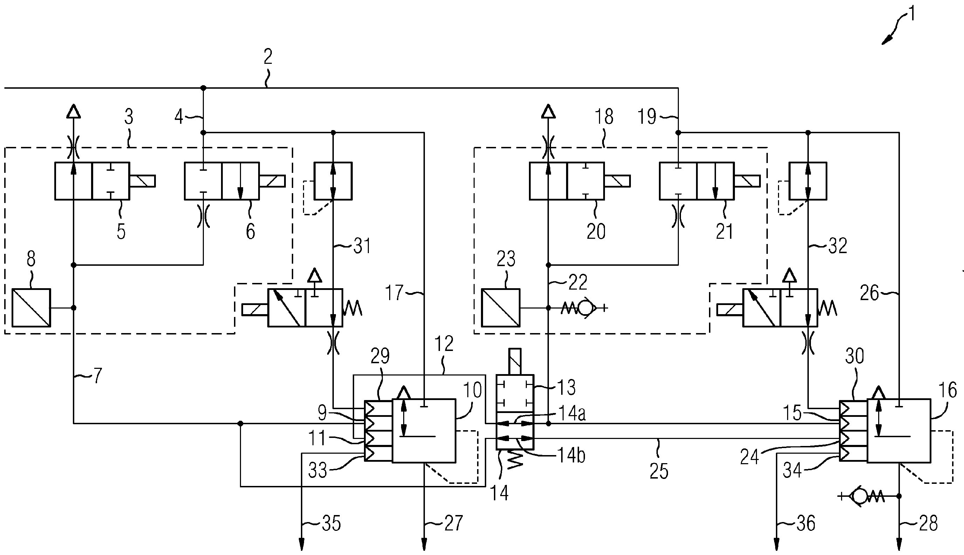

Zur weiteren Erläuterung der Erfindung ist in der Figur ein Ausführungsbeispiel mit einer pneumatisch redundant ansteuerbaren Bremsanordnung dargestellt.

Die gezeigte Bremsanordnung 1 weist eine Hauptluftbehälterleitung 2 auf, an die eine erste Wegeventileinrichtung 3 über eine Verbindungsleitung 4 angeschlossen ist. Die erste Wegeventileinrichtung 3 enthält ein Halteventil 5 und ein Belüftungsventil 6. An einer von dem Halte- und dem Belüftungsventil 5 und 6 abgehenden Verbindungsleitung 7 ist ein Sensor 8 angeschlossen, der zur ersten Wegeventileinrichtung 3 gehört.

Die abgehende Verbindungsleitung 7 führt zu einem ersten Steuereingang 9 eines ersten Relaisventils 10. Ein zweiter Steuereingang 11 des Relaisventils 10 ist - wie später noch im Einzelnen erläutert wird - über eine Druckluftleitung 12 und eine Magnetventileinrichtung 13 mit einem ersten zu- und abschaltbaren Durchgang 14a zu einem ersten Steuereingang 15 eines zweiten Relaisventils 16 geführt. Das erste Relaisventil 10 ist über eine Druckzuführungsleitung 17 mit der Hauptluftbehälterleitung 2 verbunden.

Die Bremsanordnung 1 weist ferner eine zweite Wegeventileinrichtung 18 auf, die mittels einer weiteren Verbindungsleitung 19 mit der Hauptluftbehälterleitung 2 in Verbindung steht. Die zweite Wegeventileinrichtung 18 besitzt ebenfalls ein Halteventil 20 und ein Belüftungsventil 21 und ist mit einer weiteren abgehenden Verbindungsleitung 22 - mit einem angeschlossenen Sensor 23 - mit dem ersten Steuereingang 15 des zweiten Relaisventils 16 verbunden. An den ersten Steuereingang 15 des zweiten Relaisventils 16 ist somit die erste Druckluftleitung 12 als auch die abgehende Verbindungsleitung 22 angeschlossen.

An einen zweiten Steuereingang 24 des zweiten Relaisventils 16 ist eine zweite Druckluftleitung 25 angeschlossen, die über einen weiteren zu- und abschaltbaren Durchgang 14b der Magnetventileinrichtung 13 mit dem ersten Steuereingang 9 des ersten Relaisventils 10 verbunden ist. Auch das zweite Relaisventil 16 ist über eine weitere Druckzuführungsleitung 26 mit der Hauptluftbehälterleitung 2 verbunden.

Bei der dargestellten Bremsanordnung 1 sind somit bei den Relaisventilen 10 und 16 jeweils ein zusätzlicher Steuereingang 11 und 24 eingebracht, wodurch die Möglichkeit besteht, die Wegeventileinrichtungen 3 und 18 bzw. die dadurch gebildeten Bremssteuerpfade über Kreuz in einem Wagen mit zwei Drehgestellen zu verbinden; dies führt zu einer pneumatisch redundant ansteuerbaren Bremsanordnung.

Bei der gezeigten Bremsanordnung 1 ist nämlich im Betrieb die Magnetventileinrichtung 13 bestromt, d.h., die Magnetventileinrichtung 13 ist offen, und es findet kein Durchgang in der Magnetventileinrichtung 13 statt. Jeder Bremssteuerpfad mit seinen Wegeventileinrichtungen 3 und 18 arbeitet für sich und sorgt dafür, dass die jeweils in Richtung der Pfeile 27 und 28 liegenden, nicht dargestellten Betriebsbremsen für zwei Drehgestelle unter einem Wagen für sich gesteuert werden. Tritt ein Fehler in der Bremsanordnung 1 auf, indem ein Bremssteuergerät defekt ist oder Defekte an den Ventilen in den Wegeventileinrichtungen 3 oder 18 auftreten, dann wird die Magnetventileinrichtung 13 geschlossen bzw. für die Druckleitungen 12 und 25 durchgängig, und es wirkt der Steuerdruck beider Betriebsbremspfade mit den Wegeventileinrichtungen 3 und 18 auf beide Relaisventile 10 und 16 überlagert. Fällt also eine Betriebsbremse an einem Drehgestell aus, dann bleibt beim Ausfall dieses Bremspfades die Bremsanordnung 1 im gesamten Wagen funktionsfähig.

Ergänzend ist noch anzumerken, dass die Relaisventile 10 und 16 mit dritten Steuereingängen ausgerüstet werden können. So ist in der Figur gezeigt, dass am ersten Relaisventil 10 ein dritter Steuereingang 29 und am zweiten Relaisventil 16 ebenfalls ein zusätzlicher dritter Steuereingang 30 vorhanden ist, um einen Notbremspfad 31 bzw. 32 zu bilden.

Ferner besteht die Möglichkeit, über einen vierten Steuereingang 33 am ersten Relaisventil 10 und einen zusätzlichen vierten Steuereingang 34 jeweils eine Lastkorrekturvorrichtung vorzusehen, die in nicht dargestellter Weise in Richtung von Pfeilen 35 und 36 mit der Bremsanordnung 1 verbunden sein können.

## Patentansprüche

1. Bremsanordnung (1) für ein Fahrzeug mit
- mindestens zwei elektropneumatischen Wegeventileinrichtungen (3,18) in jeweils einem ersten und einen zweiten Bremssteuerpfad und einem ersten und einem zweiten Ausgang (7,22) der Wegeventileinrichtungen (3,18), **dadurch gekennzeichnet, dass** der erste und der zweite Ausgang an jeweils einen ersten Steuereingang (9,15) von zwei Relaisventilen (10,16) angeschlossen sind, und dass die Bremsanordnung zudem
- eine erste Druckluftleitung (12), mit der ein zweiter Steuereingang (11) des ersten Relaisventils (10) über eine Magnetventileinrichtung (13) mit dem ersten Steuereingang (15) des zweiten Relaisventils (16) verbindbar ist, und
- eine zweite Druckluftleitung (25), mit der ein zweiter Steuereingang (24) des zweiten Relaisventils (16) über die Magnetventileinrichtung (13) mit dem ersten Steuereingang (9) des ersten Relaisventils (10) verbindbar ist, umfasst.

2. Bremsanordnung nach Anspruch 1,
**dadurch gekennzeichnet, dass**
die Bremsanordnung (1) eine Betriebsbremse ist.

3. Bremsanordnung nach Anspruch 1 oder 2,
**dadurch gekennzeichnet, dass**
die Relaisventile (10,16) mit jeweils einem dritten Eingang (29,30) einen Notbremspfad (31,32) bilden.

4. Bremsanordnung nach Anspruch 1,
**dadurch gekennzeichnet, dass**
die Relaisventile (10,16) mit jeweils einem vierten Eingang (33,34) einen Lastkorrekturpfad bilden.

5. Bremsanordnung nach einem der vorangehenden Ansprüche,
**dadurch gekennzeichnet, dass**
die Magnetventileinrichtung (13) eine Magnetventileinheit mit zwei gemeinsam zu- und abschaltbaren Durchgängen (14) für die Druckluftleitungen (12,25) zu den Relaisventilen (10,16) ist.

6. Bremsanordnung nach einem der Ansprüche 1 bis 4,
**dadurch gekennzeichnet, dass**
die Magnetventileinrichtung aus zwei Magnetventilen besteht, die jeweils getrennt zu- und abschaltbare Durchgänge für die Druckluftleitungen zu den Relaisventilen aufweisen.

7. Bremsanordnung nach Anspruch 5 oder 6,
**dadurch gekennzeichnet, dass**
die Magnetventileinrichtung im elektrisch nicht bestromten Zustand pneumatisch geschlossen ist.

8. Bremsanordnung nach Anspruch 5 oder 6,
**dadurch gekennzeichnet, dass**
die Magnetventileinrichtung im elektrisch nicht bestromten Zustand pneumatisch durchgängig ist.

9. Bremsanordnung nach einem der vorangehenden Ansprüche,
**dadurch gekennzeichnet, dass**
das erste Relaisventil einem Drehgestell und das zweite Relaisventil einem weiteren Drehgestell desselben Wagens zugeordnet ist.

## Claims

1. Brake arrangement (1) for a vehicle, comprising
- at least two electropneumatic directional valve devices (3, 18) in, respectively, a first and a second brake control path and a first and a second output (7, 22) of the directional valve devices (3, 18), **characterised in that** the first and the second output (7, 22) are connected to, respectively, a first control input (9, 15) of two relay valves (10, 16), and that the brake arrangement additionally comprises
- a first compressed air line (12) with which a second control input (11) of the first relay valve (10) is connectable by means of a magnetic valve device (13) to the first control input (15) of the second relay valve (16), and
- a second compressed air line (25) with which a second control input (24) of the second relay valve (16) is connectable by means of the magnetic valve device (13) to the first control input (9) of the first relay valve (10).

2. Brake arrangement according to claim 1,
c**haracterised in that**
the brake arrangement (1) is a service brake.

3. Brake arrangement according to claim 1 or 2,
**characterised in that**
the relay valves (10, 16) each form an emergency braking path (31, 32) with a respective third input (29, 30).

4. Brake arrangement according to claim 1,
**characterised in that**
the relay valves (10, 16) each form a load correction path with a respective fourth input (33, 34).

5. Brake arrangement according to one of the preceding claims,
**characterised in that**
the magnetic valve device (13) is a magnetic valve unit with two throughflows (14) which are switchable in and out together for the compressed air lines (12, 25) to the relay valves (10, 16).

6. Brake arrangement according to one of claims 1 to 4,
**characterised in that**
the magnetic valve device consists of two magnetic valves, each of which has throughflows for the compressed air lines to the relay valves, said throughflows each being switchable in and out separately.

7. Brake arrangement according to claim 5 or 6,
**characterised in that**
in the electrically non-energised state, the magnetic valve device is pneumatically closed.

8. Brake arrangement according to claim 5 or 6,
**characterised in that**
in the electrically non-energised state, the magnetic valve device is pneumatically continuous.

9. Brake arrangement according to one of the preceding claims,
**characterised in that**
the first relay valve is assigned to one bogie and the second relay valve is assigned to a further bogie of the same carriage.

## Revendications

1. Dispositif (1) de frein d'un véhicule, comprenant
- au moins deux dispositifs (3, 18) électropneumatiques de soupape à canaux dans, respectivement, un premier et un deuxième trajets de commande de frein et une première et une deuxième sortie (7, 22) des dispositifs (3, 18) de soupape à canaux,
**caractérisé en ce que** la première et la deuxième sorties sont raccordées à, respectivement, une première entrée (9, 15) de commande de deux soupapes (10, 16) relais et **en ce que** le dispositif de frein comprend, en outre
- un premier conduit (12) pour de l'air comprimé, par lequel une deuxième entrée (11) de commande de la première soupape (10) relais peut, par un dispositif (13) d'électrovanne, communiquer avec la première entrée (15) de commande de la deuxième soupape (16) relais et
- un deuxième conduit (25) pour de l'air comprimé, par lequel une deuxième entrée (24) de commande de la deuxième soupape (16) relais peut, par le dispositif (13) d'électrovanne, communiquer avec la première entrée (9) de commande de la première soupape (10) relais.

2. Dispositif de frein suivant la revendication 1,
**caractérisé en ce que**
le dispositif (1) de frein est un frein de service.

3. Dispositif de frein suivant la revendication 1 ou 2,
**caractérisé en ce que**
les soupapes (10, 16) relais forment, avec, respectivement, une troisième entrée (29, 30), un trajet (31, 32) de frein de secours.

4. Dispositif de frein suivant la revendication 1,
**caractérisé en ce que** les soupapes (10, 16) relais forment, avec, respectivement, une quatrième entrée (33, 34), un trajet (33, 34) de correction de charge.

5. Dispositif de frein suivant l'une des revendications précédentes,
**caractérisé en ce que**
le dispositif (13) d'électrovanne est une unité d'électrovanne ayant deux passages (14), pouvant être ouverts et fermés en même temps, pour les conduits (12, 25) pour de l'air comprimé menant aux soupapes (10, 16) relais.

6. Dispositif de frein suivant l'une des revendications 1 à 4,
**caractérisé en ce que**
le dispositif d'électrovanne est constitué de deux électrovannes, qui ont chacune des passages pouvant être ouverts et fermés séparément pour les conduits pour de l'air comprimé menant aux soupapes relais.

7. Dispositif de frein suivant la revendication 5 ou 6,
**caractérisé en ce que**
le dispositif d'électrovanne est fermé pneumatiquement dans l'état non alimenté en électricité.

8. Dispositif de frein suivant la revendication 5 ou 6,
**caractérisé en ce que**
le dispositif d'électrovanne est passant pneumatiquement dans l'état non alimenté en électricité.

9. Dispositif de frein suivant l'une des revendications précédentes,
**caractérisé en ce que**
la première soupape relais est associée à un boggie et la deuxième soupape relais à un autre boggie de la même voiture.
